# EUROPÄISCHE PATENTSCHRIFT

(11) **EP 2 585 247 B1**
(45) Veröffentlichungstag und Bekanntmachung des Hinweises auf die Patenterteilung: **13.05.2015**
(21) Anmeldenummer: 11734033.1
(22) Anmeldetag: 21.06.2011
(51) Int. Cl.: B23K 20/12, B21J 15/02

(54) **VERBINDUNGSELEMENT FÜR EINE REIBSCHWEIßVERBINDUNG ZUR VERBINDUNG VON MINDESTENS ZWEI PLATTENARTIGEN BAUTEILEN**
CONNECTING ELEMENT FOR A FRICTION-WELDED CONNECTION FOR CONNECTING AT LEAST TWO PANEL-LIKE COMPONENTS
ÉLÉMENT D'ASSEMBLAGE POUR ASSEMBLER PAR SOUDAGE PAR FRICTION AU MOINS DEUX ÉLÉMENTS EN FORME DE PLAQUES

(30) Priorität: 23.06.2010 DE 102010017550
(43) Veröffentlichungstag der Anmeldung: 01.05.2013
(73) Patentinhaber: EJOT GmbH & Co. KG, 57319 Bad Berleburg (DE)
(72) Erfinder: CHRIST, Eberhard, 99897 Tambach-Dietharz (DE); THIEM, Jörg, 98544 Zella-Mehlis (DE); MAIWALD, Mario, 99831 Creuzburg (DE); DUBIEL, Gerhard, 99897 Tambach-Dietharz (DE); ZEBISCH, Sebastian, 99897 Tambach-Dietharz (DE); OSCHMANN, Nico, 99894 Friedrichroda (DE); WERKMEISTER, Marco, 99894 Leinatal (DE)
(74) Vertreter: Puschmann Borchert Bardehle Patentanwälte Partnerschaft mbB
(86) Internationale Anmeldenummer: PCT/EP2011/060311
(87) Internationale Veröffentlichungsnummer: WO 2011/161091

(56) Entgegenhaltungen:
- WO-A1-02/062518
- DE-A1-102009 006 775
- GB-A- 732 203
- US-A1- 2003 135 974
- US-B1- 6 206 268

## Beschreibung

Die Erfindung bezieht sich auf ein Verbindungselement für eine Reibschweißverbindung zur Verbindung von mindestens zwei plattenartigen Bauteilen mit einem unter Rotation und Druck stehenden Dorn, der zum Durchdringen des bzw. der oberen Bauteile hinsichtlich seiner Länge an die Stärke des bzw. der oberen Bauteile angepasst ist und ein polygonartiges Unrundprofil mit gerundeten Eckbereichen aufweist.

Ein derartiges Verbindungselement ist in den Figuren 5A und 5B der DE 10 2009 006 775A1 dargestellt. In der zugehörigen Beschreibung wird hierzu angegeben, dass durch das Unrundprofil Freiräume für die Abfuhr von Spännen und Abrieb geschaffen wird.

Es ist weiterhin aus der britischen Patentschrift 7 32 203 ein in Metall einzutreibendes Verankerungsprojektil bekannt, das auf einem in das Metall einzutreibenden Dorn relativ kurve leicht schräg verlaufende Rippen aufweist, die dicht nebeneinander angeordnet sind und die die Verankerung des Projektils in besonders intensiver Weise sichern sollen.

Bei der Erfindung handelt es sich um ein Verbindungselement für eine Reibschweißverbindung zur Verbindung von mindestens zwei plattenartigen Bauteilen, der die Aufgabe zugrunde liegt, dem beim Reibschweißvorgang verdrängten Material gezielt und durch Krafteinwirkung unterstützt ein Raum zur Verfügung gestellt wird, durch den dieses Material abfließen kann. Erfindungsgemäß geschieht dies dadurch, dass das Unrundprofil gewindeartig derart gestaltet ist, dass die längs des Domes (2) verlaufenden Eckbereiche eine Steigung besitzen, deren Länge kürzer als ein vollständiger Gewindegang ist.

Aufgrund der gewindeartigen Gestaltung des Unrundprofils verlaufen die zwischen den Eckbereichen liegenden Hohlräume in einer Weise, dass durch deren gewindeartige Gestaltung das verdrängte Material gewissermaßen gezielt von dem Bereich des Reibschweißvorganges weggeführt wird und dabei aufgrund der Gewindeführung der Hohlräume bei der Drehung des Verbindungselements gewissermaßen von der Aufschmelzstelle abgesogen wird, wodurch eine zu starke Ansammlung und Stauung von erweichtem Material vermieden wird und sich damit die durch Reibschweißen hergestellte Verbindung zwischen Verbindungselement und der untersten Platte in besonders gesicherter Weise herstellen lässt.

Die Steigung des Unrundprofils lässt sich entweder nach Art eines Rechtsgewindes oder nach Art eines Linksgewindes gestalten. Dies hängt davon ab, in welche Richtung die Drehung des Verbindungselements beim Reibschweißvorgang erfolgt. Dabei wird bevorzugt die Steigung in eine solche Richtung gelegt, die der Drehrichtung beim Reibschweißvorgang entspricht.

In den Figuren sind Ausführungsbeispiele der Erfindung dargestellt.

Es zeigen:
- Figur 1: ein Verbindungselement mit einem aus einem Bund bestehenden Kopf und einem daran anschließenden Dom, für die Herstellung der Reibschweißverbindung, der durch Striche angedeutete, abgerundete Eckbereiche aufweist;
- Figur 2: das Verbindungselement gemäß Figur 1 mit zwei plattenartigen oberen Bauteilen und einem plattenartigen unteren Bauteil, wobei die beiden oberen Platten von dem Verbindungselement bereits durch Aufschmelzen durchdrungen sind;
- Figur 3: das gleiche Verbindungselement mit vollständig durch die beiden oberen Platten und in das untere Bauteil eingedrungenem Dorn, mit dem der Dorn eine Reibschweißverbindung eingegangen ist;
- Figur 4: ein Querschnitt längs der Linie IV-IV aus Figur 1, der einerseits das Material des Domes im Querschnitt und gegenüber einer gedachten Umfangslinie abgesetzte Hohlräume zwischen abgerundeten Eckbereichen zeigt, und
- Figur 5: prinzipiell die gleiche Gestaltung wie die Figur 1, jedoch mit gegenläufiger Steigung der Eckbereiche.

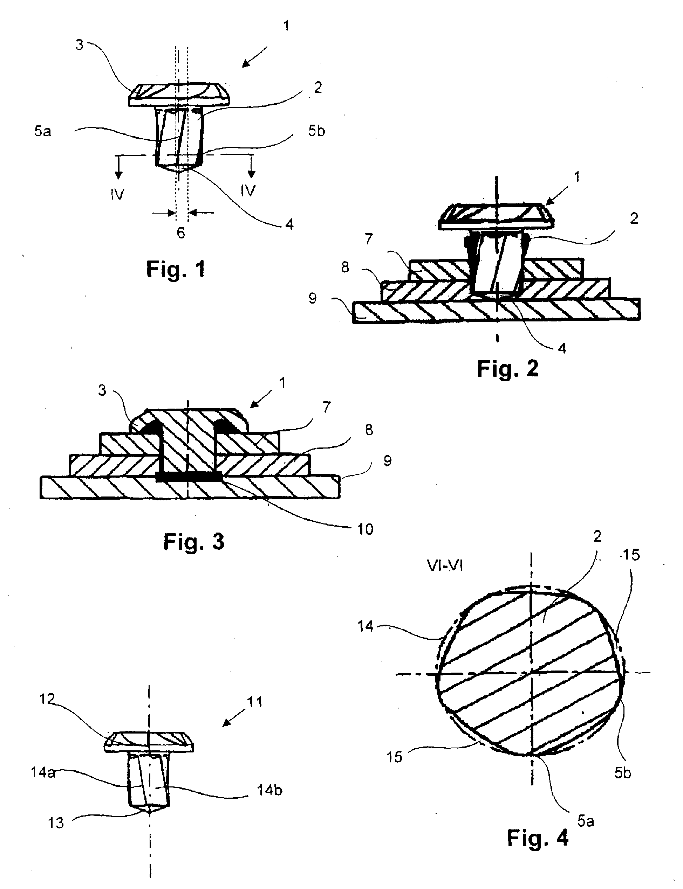

In der Figur 1 ist das Verbindungselement 1 dargestellt, das aus dem Dorn 2 und dem an diesem angesetzten Bund 3 besteht. Der Dorn 2 endet an seiner dem Bund 3 abgewandten Seite in einem stumpfen Kegel 4, durch den beim Reibschweißvorgang eine gewisse Zentierwirkung ausgeht. Es ist jedoch auch möglich, den Dorn 2 mit einer ebenen Abschlussfläche zu versehen. Durch die beiden schräg verlaufenden, längs des Domes 2 gezeichneten Linien 5a und 5b sind abgerundete Eckbereiche angedeutet, zwischen denen Freiräume liegen, auf deren Wirkung und Gestaltung im Zusammenhang mit der Figur 4 näher eingegangen wird. Die Eckbereiche 5a und 5b verlaufen schräg zur Längsachse des Verbindungselementes 1, womit deren Gestaltung als Gewinde angedeutet wird, das hier mit einem kleinen Versatz verläuft, und zwar ist der Versatz der Eckbereiche 5a und 5b über die Länge des Domes 2 kürzer als ein vollständiger Gewindegang sein würde. Damit besitzen die Gewindegänge 5a und 5b jeweils eine Steigung, die kürzer ist als ein vollständiger Gewindegang wäre.

In der Darstellung gemäß Figur 1 ist der Versatz der Eckbereiche in prinzipieller Weise dargestellt, nämlich durch die von den Enden der Eckbereiche 5a und 5b ausgehenden strichpunktierten Linien zu dem Abstand 6, der den Versatz selbst direkt angibt.

In der Figur 2 ist das Verbindungselement 1 zusammen mit zwei oberen Platten 7 und 8 und einer Grundplatte 9 dargestellt, wobei es sich bei den Platten 7 und 8 hier beispielsweise um Aluminiumplatten handelt, während es sich bei der Grundplatte 9 um eine Stahlplatte handelt. Der Dorn 2 des Verbindungselementes 1 war aufgrund von Druck und Drehung in bekannter Weise durch die beiden Platten 7 und 8 hindurchgedrungen, wobei deren Material aufgeschmolzen worden ist. Der Dorn 2 ist in der Figur 2 in einer Position dargestellt, in der sein stumpfer Kegel 4 auf die Grundplatte 9 auftrifft und an dieser Stelle unter Rotation und Druck zu einem Aufschmelzen des Materials des Kegels führt. Dabei wird entsprechend der Wahl des Materials für die Platte 9 auch dieses angeschmolzen, so dass sich eine Reibschweißverbindung ergibt.

In der Figur 3 ist der in der Figur 2 dargestellten Vorgang in seinem Endstadium dargestellt, in dem das Verbindungselement 1 zusammen mit der Grundplatte 9 die Reibschweißverbindung 10 in bekannter Weise hergestellt hat, womit also die drei Platten 7, 8, 9 fest miteinander verbunden sind, und zwar ausgehend von der Grundplatte 9 über das Verbindungselement 1 und dessen Bund 3, womit alle diese Bauelemente zu einer festen Verbindung verbunden sind. Es sei darauf hingewiesen, dass natürlich anstelle von zwei oberen Platten 7 und 8 auch nur eine einzige verwendet werden kann, je nachdem, um welche Gestaltung es sich bei dem hergestellten Verbund letzten Endes handelt.

Figur 4 zeigt den Schnitt IV-IV aus Figur 1, der die Gestaltung des Domes 2 zeigt. Um dabei die Gestaltung des unrunden Profiles zu verdeutlichen, ist in Figur 4 die gestrichelt gezeichnete Kreislinie 14 eingezeichnet, innerhalb deren sich der Schnitt IV-IV aus Figur 1 einfügt, der somit die äußere Gestaltung des Domes 2 wiedergibt. Gemäß Figur 4 besitzt der Dorn 4 fünf abgerundete Eckbereiche, von denen zwei Eckbereiche mit 5a und 5b bezeichnet sind. Zwischen diesen Eckbereichen weist die unrunde Gestaltung gemäß Figur 4 die Hohlräume 15 auf, die sich ergeben, wenn der Dom 2 in das Material der Platten 7 und 8 gemäß Figur 2 eingedrungen ist. Durch diese Hohlräume 15 kann aus dem Material der Platten 7 und 8 und auch der Reibschweißstelle 10 von der Platte 9 abfließen.

Figur 5 zeigt in prinzipieller Darstellung ein dem Verbindungselement 11 gemäß Figur 1 ähnliches Verbindungselement, das aus dem Bund 12 und dem Dorn 13 besteht, der an seiner Außenfläche mit den prinzipiell dargestellten Eckbereichen 14a und 14b versehen ist. Wie die Figur 5 deutlich zeigt, verlaufen die Eckbereiche 14a und 14b mit einer Steigung, die entgegengesetzt zu der Steigung der Eckbereiche 5a und 5b gemäß Figur 1 verläuft. Die jeweilige Steigungsrichtung wird anhand der Drehrichtung des jeweiligen Verbindungselementes beim Reibschweißvorgang gewählt, und zwar derart, dass die Steigungsrichtung wie bei einem Spiralbohrer mit der Drehrichtung des betreffenden Domes 2 bzw. 13 ausgerichtet ist, das heißt, bei einem Verbindungselement gemäß Figur 1 würde dessen Drehrichtung nach Art eines Rechtsdralles verlaufen, während bei Verwendung eines Verbindungselementes 11 gemäß Figur 5 verläuft die Drehrichtung für den Reibschweißvorgang in umgekehrter Richtung, nämlich als Linksdrall.

### Bezugszeichenliste

- 1: Verbindungselement
- 2: Dorn
- 3: Angesetzter Bund
- 4: Stumpfer Kegel
- 5: Abgerundete Eckbereiche 5a und 5b
- 6: Abstand
- 7: Obere Platte
- 8: Obere Platte
- 9: Grundplatte
- 10: Reibschweißverbindung
- 11: Verbindungselement
- 12: Bund
- 13: Dom
- 14: Abgerundete Eckbereiche 14a und 14b
- 15: Hohlraum

## Patentansprüche

1. Verbindungselement (1) für eine Reibschweißverbindung zur Verbindung unter Rotation und Druck von mindestens zwei plattenartigen Bauteilen (8, 9) mit einem Dom (2,13), der zum Durchdringen des bzw. der oberen Bauteile (7, 8) hinsichtlich seiner Länge an die Stär des bzw. der oberen Bauteile (7, 8) angepasst ist und ein polygonartiges Unrundprofil mit gerundeten Eckbereichen (5a, 5b) aufweist, **dadurch gekennzeichnet, dass** das Unrundprofil gewindeartig derart gestaltet ist, dass die längs des Domes (2) verlaufenden Eckbereiche einen Versatz besitzen, wobei der Versatz der Eckbereiche (5a, 5b) über die Länge des Domes (2) kürzer als ein vollständiger Gewindegang ist.

2. Verbindungselement nach Anspruch 1, **dadurch gekennzeichnet, dass** die Steigung nach Art eines Rechtsgewindes verläuft.

3. Verbindungselement nach Anspruch 1, **dadurch gekennzeichnet, dass** die Steigung nach Art eines Linksgewindes verläuft.

## Claims

1. Connecting element (1) for a friction-welded connection for connecting - under rotation and with the application of pressure - at least two panel-like components (8, 9) comprising a mandrel (2, 13) whose length has been adapted to the thickness of the upper component(s) (7, 8) to ensure said mandrel will penetrate said upper component(s) (7, 8), and which has a polygonal noncircular profile with rounded corner regions (5a, 5b) **characterized in that** said noncircular profile has a thread-like design such that said corner regions extending along said mandrel (2) will exhibit some amount of offset, with the offset of said corner regions (5a, 5b) along the length of said mandrel (2) being shorter than one complete thread.

2. The connecting element of claim 1 **characterized in that** the pitch of the thread extends in the manner of a right-hand thread.

3. The connecting element of claim 1 **characterized in that** the pitch of the thread extends in the manner of a left-hand thread.

## Revendications

1. Élément d'assemblage (1) pour assembler par soudage par friction, sous l'effet de la rotation et de la pression, au moins deux éléments en forme de plaque (8, 9) avec un dôme (2, 13) ajusté dans sa longueur selon la force du ou des élément(s) structurel(s) supérieurs (7, 8) pour traverser le ou les élément(s) structurel(s) supérieurs (7, 8) et présentant un profil ovale en forme de polygone avec zones de coin arrondie (5a, 5b), **caractérisé en ce que** le profil ovale est formé tel un filetage de sorte que les zones de coin s'étendant longitudinalement par rapport au dôme (2) présentent un déport, le déport des zones de coin (5a, 5b) sur la longueur du dôme (2) étant plus court qu'un taraudage complet.

2. Élément d'assemblage selon la revendication 1, **caractérisé en ce que** l'inclinaison s'étend à la manière d'un filetage à droite.

3. Élément d'assemblage selon la revendication 1, **caractérisé en ce que** l'inclinaison s'étend à la manière d'un filetage à gauche.
